# EUROPÄISCHE PATENTSCHRIFT

(11) **EP 3 529 669 B1**
(45) Veröffentlichungstag und Bekanntmachung des Hinweises auf die Patenterteilung: **21.10.2020**
(21) Anmeldenummer: 17826155.8
(22) Anmeldetag: 05.12.2017
(51) Int. Cl.: G05B 13/04

(54) **VERFAHREN UND STEUEREINRICHTUNG ZUM STEUERN EINES TECHNISCHEN SYSTEMS**
METHOD AND CONTROL DEVICE FOR CONTROLLING A TECHNICAL SYSTEM
PROCÉDÉ ET DISPOSITIF DE COMMANDE POUR COMMANDER UN SYSTÈME TECHNIQUE

(30) Priorität: 06.12.2016 DE 102016224207
(43) Veröffentlichungstag der Anmeldung: 28.08.2019
(73) Patentinhaber: Siemens Aktiengesellschaft, 80333 München (DE)
(72) Erfinder: OTTE, Clemens, 81739 München (DE); HENTSCHEL, Alexander, Vancouver, BC, V6H 1V4 (CA); UDLUFT, Steffen, 82223 Eichenau (DE)
(86) Internationale Anmeldenummer: PCT/EP2017/081473
(87) Internationale Veröffentlichungsnummer: WO 2018/104280

(56) Entgegenhaltungen:
- DE-A1-102014 212 747
- US-A1- 2013 013 543
- US-A1- 2016 147 203

## Beschreibung

Bei der Steuerung komplexer technischer Systeme, wie zum Beispiel Windturbinen, Gasturbinen, Fertigungsanlagen, Kraftfahrzeugen oder technischen Bildgebungs- oder Analysesystemen, ist es in der Regel wünschenswert, ein Verhalten, eine Wirkung und/oder eine Ausbeute des technischen Systems hinsichtlich vorgegebener Kriterien zu optimieren. Hierfür verwenden zeitgemäße Steuerungen häufig komplexe Steuermodelle, die aus einem jeweiligen Systemzustand des technischen Systems spezifische Steuerdaten zur Steuerung des technischen Systems ableiten. Derartige Steuermodelle können insbesondere zur Prädiktion, Simulation, Analyse und/oder Klassifikation von Systemzuständen des technischen Systems genutzt werden. Zeitgemäße Steuermodelle basieren häufig auf Techniken des maschinellen Lernens, zum Beispiel mittels neuronaler Netze und können anhand von Trainingsdaten und/oder anderen Betriebsdaten des technischen Systems spezifisch darauf trainiert oder ausgelegt werden, die Steuerung hinsichtlich vorgegebener Kriterien zu optimieren.

So kann zum Beispiel eine Steuerung einer Windturbine anhand von Trainingsdaten lernen, einen Anstellwinkel der Rotorblätter bei Windturbulenzen zu ändern, um ein Abreißen der Strömung zu vermeiden und so die Energieerzeugung zu maximieren. Die Optimierung erfolgt hierbei automatisch und erfordert in der Regel keinen manuellen Eingriff.

Aus dem Dokument DE 10 2014 212747 A1 ist ein Verfahren zur Steuerungsoptimierung insbesondere für Windturbinen offenbart, bei dem ein neuronales Netz trainiert wird, dessen Belohnungsfunktion mittels einer Simulation optimiert wird.

Bei vielen technischen Systemen wird ein Verhalten, eine Wirkung und/oder eine Ausbeute durch externe Einflussfaktoren, wie zum Beispiel einer Windgeschwindigkeit oder Windturbulenzen, stärker beeinflusst als durch interne Steueraktionen, wie zum Beispiel der oben erwähnten Änderung des Anstellwinkels. Häufig verhalten sich derartige Einflussgrößen auch hochgradig stochastisch und sind nur teilweise erfassbar. In solchen Fällen kann das maschinelle Lernen einer optimierten Steuerstrategie, das heißt optimierter Steueraktionen, erheblich beeinträchtigt werden.

Es ist Aufgabe der vorliegenden Erfindung ein Verfahren und eine Steuereinrichtung zum Steuern eines technischen Systems anzugeben, die sich effizienter trainieren lassen.

Gelöst wird diese Aufgabe durch ein Verfahren mit den Merkmalen des Patentanspruchs 1, durch eine Steuereinrichtung mit den Merkmalen des Patentanspruchs 12, durch ein Computerprogrammprodukt mit den Merkmalen des Patentanspruchs 13, sowie durch ein computerlesbares Speichermedium mit den Merkmalen des Patentanspruchs 14.

Zum Steuern eines technischen Systems, z.B. einer Windturbine, einer Solaranlage, eines Solarkraftwerks, einer Gasturbine, eines Kraftfahrzeugs, einer Produktionsanlage oder einer anderen Anlage wird ein Systemzustand des technischen Systems fortlaufend erfasst. Ein solcher Systemzustand kann z.B. physikalische, wirkungsbedingte, regelungstechnische und/oder bauartbedingte Betriebsgrößen, Eigenschaften, Leistungsdaten, Wirkungsdaten, Systemdaten, Vorgabewerte, Steuerdaten, Sensordaten, Messwerte, Umgebungsdaten und/oder andere im Betrieb des technischen Systems anfallende Daten umfassen. Insbesondere kann der Systemzustand auch eine Folge von Zuständen oder einen Zustandsverlauf des technischen Systems umfassen. Mittels eines trainierten ersten Steuermodells wird anhand eines erfassten Systemzustandes ein Folgezustand des technischen Systems prädiziert. Daraufhin wird ein Abstandswert für einen Abstand zwischen dem prädizierten Folgezustand und einem tatsächlich eintretenden Systemzustand ermittelt. Weiterhin wird ein zweites Steuermodell mittels des trainierten ersten Steuermodells darauf trainiert, anhand eines erfassten Systemzustandes und einer Steueraktion zum Steuern des technischen Systems den Abstandswert zu prädizieren. Ein durch das erste Steuermodell prädizierter Folgezustand wird dann anhand eines durch das trainierte zweite Steuermodell prädizierten Abstandswerts modifiziert. Der modifizierte Folgezustand wird zum Steuern des technischen Systems ausgegeben. Anhand des ausgegebenen modifizierten Folgezustandes können insbesondere vorzunehmende Steueraktionen ermittelt, selektiert und/oder geplant werden.

Zum Ausführen des erfindungsgemäßen Verfahrens sind eine Steuereinrichtung, ein Computerprogrammprodukt sowie ein computerlesbares Speichermedium vorgesehen.

Ein Vorteil der Erfindung ist darin zu sehen, dass durch die Aufspaltung einer Modellierung des technischen Systems in das erste und das zweite Steuermodell ein Einfluss der Steueraktion auf einen Folgezustand in der Regel erheblich besser zu detektieren ist, als bei einem monolithischen Modell des technischen Systems. Dies gilt insbesondere, wenn der Einfluss der Steueraktion auf den Folgezustand eher gering ist. Auf diese Weise kann ein Trainingserfolg in der Regel erheblich gesteigert werden. Darüber hinaus werden häufig weniger Trainingsdaten und eine kürzere Trainingszeit benötigt.

Vorteilhafte Ausführungsformen und Weiterbildungen der Erfindung sind in den abhängigen Ansprüchen angegeben.

Vorzugsweise können das erste und/oder das zweite Steuermodell ein neuronales Netz, einen Gauß-Prozess, eine Support-Vector-Machine, ein datengetrieben trainierbares Regressionsmodell, ein physikalisches Modell und/oder einen Entscheidungsbaum umfassen. Für die vorstehenden Implementierungsvarianten der Steuermodelle sind eine Vielzahl von effizienten Trainings- und Lernverfahren verfügbar.

Weiterhin kann der Systemzustand eine Einflussgröße umfassen, deren Einfluss auf das technische System einen Einfluss der Steueraktion auf das technische System dominiert. Eine derartige Einflussgröße kann insbesondere einen externen oder internen Einfluss auf das technische System spezifizieren, der umgebungsbedingt, regelungstechnisch und/oder wirkungsbedingt sein kann.

Bei einer Windturbine als technischem System kann die Einflussgröße insbesondere eine Windgeschwindigkeit, eine Turbinenleistung, eine Rotationsgeschwindigkeit und/oder eine Beschleunigung der Triebwerksgondel umfassen. Hierbei hat insbesondere die Windgeschwindigkeit einen erheblich größeren Einfluss auf die Leistungsausbeute als z.B. eine durch Steueraktionen beeinflussbare Einstellung der Rotorblätter. Weitere Beispiele von dominierenden Einflussgrößen sind Wetterverhältnisse bei einem Solarkraftwerk, Gastemperaturen bei einer Gasturbine, ein Werkstückzustand bei einer Produktionsanlage oder die Geschwindigkeit bei einem Kraftfahrzeug.

In Fällen von dominierenden Einflussgrößen erweist sich die erfindungsgemäße Separation der Steuermodelle als besonders vorteilhaft gegenüber dem Stand der Technik. So zeigt sich insbesondere, dass ein Einfluss der Steueraktion bei der Prädiktion des Abstandswerts in der Regel erheblich besser zu detektieren ist, als bei der Prädiktion des von der Einflussgröße dominierten Folgezustandes. Dies kann darauf zurückgeführt werden, dass die dominierenden Effekte bereits vom trainierten ersten Steuermodell absepariert werden. Damit kann ein Trainingserfolg in der Regel erheblich gesteigert werden.

Sofern die Einflussgröße statistischen Schwankungen unterworfen ist, kann weiterhin vorgesehen sein, das erste Steuermodell darauf zu trainieren, ein statistisches Mittel eines Abstandes zwischen dem prädizierten Folgezustand und einem tatsächlich eintretenden Systemzustand zu optimieren, insbesondere zu minimieren. Auf diese Weise kann auch bei statistisch schwankenden und/oder nur teilweise messbaren Einflussgrößen in der Regel eine verhältnismäßig hohe Prädiktionsqualität erreicht werden.

Nach einer vorteilhaften Ausführungsform der Erfindung kann das erste Steuermodell anhand von erfassten Systemzuständen des technischen Systems trainiert werden, insbesondere zur Prädiktion eines Folgezustandes anhand eines Systemzustandes des technischen Systems.

Alternativ oder zusätzlich kann das erste Steuermodell auch anhand von erfassten Systemzuständen eines vom technischen System verschiedenen Trainingssystems trainiert werden, insbesondere zur Prädiktion eines Folgezustandes anhand eines Systemzustandes des Trainingssystems. Ein solches Training wird häufig auch als Transfer-Learning bezeichnet. Durch die Nutzung von Trainingsdaten anderer Systeme kann die Menge von auf dem technischen System selbst zu erfassenden Trainingsdaten in der Regel erheblich reduziert werden. Auf diese Weise können erforderliche Trainingsphasen häufig verkürzt werden. Aufgrund der erfindungsgemäßen Separation der Steuermodelle wirken sich Ungenauigkeiten, die durch individuelle Unterschiede zwischen dem technischen System und dem Trainingssystem bedingt sind, in der Regel weniger aus, da diese Ungenauigkeiten durch das zweite Steuermodell gewissermaßen nachgebessert werden.

Weiterhin kann vorgesehen sein, bei einem Training des ersten Steuermodells und/oder bei der Prädiktion des Folgezustandes die Steueraktion nicht zu berücksichtigen. Der tatsächlich vorhandene Einfluss der Steueraktion geht dann beim Training des ersten Steuermodells als geringfügige statistische Störgröße ein, was kaum Einfluss auf einen Trainingserfolg oder eine Vorhersagequalität des ersten Steuermodells hat. Dagegen wird der primäre Einfluss der Einflussgröße häufig besser detektiert.

Nach einer weiteren vorteilhaften Ausführungsform der Erfindung kann vorgesehen sein, dass für mehrere Steueraktionen mittels des trainierten zweiten Steuermodells jeweils ein Abstandswert prädiziert und damit ein prädizierter Folgezustand modifiziert und der jeweiligen Steueraktion zugeordnet wird. Aus den resultierenden modifizierten Folgezuständen kann dann ein Zielzustand selektiert werden, und das technische System kann anhand der dem selektierten Zielzustand zugeordneten Steueraktion gesteuert werden. Als Zielzustand kann hierbei insbesondere derjenige der resultierenden modifizierten Folgezustände selektiert werden, der ein vorgegebenes Kriterium optimiert. Dieses Kriterium kann z.B. eine Ausbeute, eine Performanz, einen Ressourcenverbrauch und/oder einen Verschleiß des technischen Systems betreffen.

Nach einer vorteilhaften Weiterbildung der Erfindung kann ein drittes Steuermodell mittels des trainierten ersten Steuermodells und des trainierten zweiten Steuermodells darauf trainiert werden, anhand eines erfassten Systemzustandes eine optimierte Steueraktion zum Steuern des technischen Systems auszugeben. Hierbei kann als optimierte Steueraktion insbesondere diejenige Steueraktion ausgegeben werden, die einen modifizierten Folgezustand nach einem vorgegebenen Kriterium optimiert. Wie oben bereits angegeben, kann das vorgegebene Kriterium z.B. eine Ausbeute, eine Performanz, einen Ressourcenverbrauch und/oder einen Verschleiß des technischen Systems betreffen. Ein solches drittes Steuermodell wird häufig auch als Policy-Model bezeichnet.

Vorzugsweise kann das dritte Steuermodell mittels eines Verfahrens des bestärkenden Lernens trainiert werden.

Ein Ausführungsbeispiel wird nachfolgend anhand der Zeichnung näher erläutert. Dabei veranschaulichen jeweils in schematischer Darstellung:
- Figur 1: eine Windturbine und eine erfindungsgemäße Steuereinrichtung zum Steuern der Windturbine,
- Figur 2: ein Training einer erfindungsgemäßen Steuereinrichtung zum Steuern eines technischen Systems und
- Figur 3: ein Steuern des technischen Systems mittels der trainierten Steuereinrichtung.

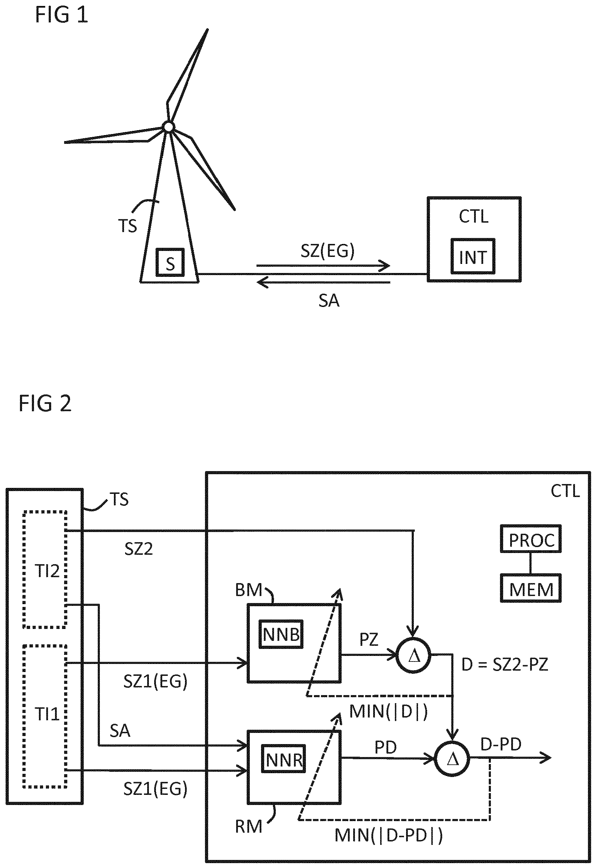

Figur 1 zeigt in schematischer Darstellung eine Windturbine als technisches System TS, die mit einer erfindungsgemäßen Steuerung CTL zum Steuern der Windturbine TS gekoppelt ist. Als technisches System TS können auch eine Solaranlage, ein Solarkraftwerk, eine Gasturbine, eine Produktionsanlage oder eine andere Anlage, ein technisches Bildgebungs- oder Analysesystem, ein Kraftfahrzeug oder eine Kombination hiervon vorgesehen sein. Die Steuereinrichtung CTL kann als Teil des technischen Systems TS oder ganz oder teilweise extern zum technischen System TS implementiert sein. Die Steuereinrichtung CTL verfügt über einen Interpreter INT zum Ausführen von Steuermodellen.

Das technische System TS weist Sensoren S auf zum fortlaufenden Erfassen und/oder Messen von Systemzuständen oder Teilsystemzuständen des technischen Systems TS. Ein jeweiliger Sensor S kann dabei auch als Softsensor implementiert sein.

Ein mittels der Sensoren S erfasster Systemzustand SZ des technischen Systems TS wird durch Zustandsdaten spezifiziert oder repräsentiert. Derartige Zustandsdaten können zum Beispiel physikalische, regelungstechnische, wirkungsbedingte und/oder bauartbedingte Betriebsgrößen, Betriebsdaten, Eigenschaften, Leistungsdaten, Wirkungsdaten, Systemdaten, Vorgabewerte, Steuerdaten, Umgebungsdaten, Sensordaten, Messwerte oder andere im Betrieb des technischen Systems TS anfallende Daten umfassen. Die Zustandsdaten können dabei insbesondere durch einen Datenvektor dargestellt werden.

Vorzugsweise umfassen die Zustandsdaten einen zu optimierenden Zielparameter, der zum Beispiel eine Leistung, eine Ausbeute und/oder ein Verhalten des technischen Systems TS beschreibt. Ein Zielparameter kann insbesondere ein Rückgabewert einer sogenannten Belohnungsfunktion sein. Der Rückgabewert, beispielsweise eine Leistungsausbeute des technischen Systems TS, wird hierbei als Funktion eines Systemzustandes oder eines Teilsystemzustandes ermittelt. Eine solche Belohnungsfunktion wird häufig auch als Reward Function bezeichnet.

Der Systemzustand SZ kann insbesondere einen Zustandsverlauf umfassen, zum Beispiel in Form einer Folge oder eines Vektors von zeitlich aufeinanderfolgenden, von den Sensoren S fortlaufend gemessenen Zuständen.

Darüber hinaus umfasst der Systemzustand SZ insbesondere eine oder mehrere dominierende Einflussgrößen EG. Eine Einflussgröße EG spezifiziert hierbei insbesondere eine externe oder interne Einwirkung auf das technische System TS oder auf Betriebsbedingungen des technischen Systems TS. Die Einwirkung beziehungsweise der Einfluss kann umgebungsbedingt, physikalisch, regelungstechnisch und/oder wirkungsbedingt sein. Die Einflussgröße EG kann dabei auch einen zeitlichen Verlauf einer Einwirkung umfassen. Im vorliegenden Ausführungsbeispiel einer Windturbine als technisches System TS kann die Einflussgröße EG insbesondere eine gemessene Windgeschwindigkeit umfassen. Zur Erfassung der Windgeschwindigkeit kann einer der Sensoren S als Anemometer ausgebildet sein.

Der Einfluss der Einflussgröße EG auf das technische System TS dominiert insbesondere einen Einfluss einer Steueraktion SA auf das technische System TS. So hat bei einer Windturbine - wie oben schon erwähnt - die Windgeschwindigkeit in der Regel einen erheblich größeren Einfluss auf eine Leistungsausbeute der Windturbine als zum Beispiel eine Einstellung der Rotorblätter. Weitere Beispiele von dominierenden Einflussgrößen EG sind bei Windturbinen eine Turbinenleistung, eine Rotationsgeschwindigkeit des Rotors und/oder eine Beschleunigung der Triebwerksgondel, bei einem Solarkraftwerk die Wetterverhältnisse, bei einer Gasturbine eine Gastemperatur, bei Produktionsanlagen ein Werkstückzustand und bei einem Kraftfahrzeug dessen Geschwindigkeit. Die Einflussgröße EG wird mittels der Sensoren S fortlaufend gemessen und durch Zustandsdaten spezifiziert oder dargestellt.

Im vorliegenden Ausführungsbeispiel wird der Systemzustand SZ mit der davon umfassten Einflussgröße EG in Form von Zustandsdaten vom technischen System TS zur Steuereinrichtung CTL übermittelt. Abhängig vom übermittelten Systemzustand SZ ermittelt die Steuereinrichtung CTL optimierte Steueraktionen SA und übermittelt diese zum Steuern an das technische System TS.

Durch eine jeweilige Steueraktion SA wird das technische System TS gesteuert, indem die Steueraktion SA durch das technische System TS ausgeführt wird. Dabei wird das technische System TS von einem aktuellen Systemzustand in einen Folgezustand überführt. Eine solche Steueraktion SA wird häufig auch als Aktion, als Aktionsgröße oder als Steuergröße bezeichnet und durch Steuerdaten spezifiziert oder repräsentiert. Die Steuerdaten können hierbei insbesondere auch Steuersignale, Simulationsdaten, Prognosedaten, Analysedaten, Zustandsdaten, Klassifikationsdaten, Überwachungsdaten und/oder andere steuerungsrelevante, das heißt zur Steuerung des technischen Systems beitragende Daten umfassen. Insbesondere kann die Steueraktion SA auch eine Aktionssequenz umfassen. Wie oben bereits erwähnt, sei angenommen, dass der Einfluss der Steueraktion SA auf das technische System TS durch die Einflussgröße EG dominiert wird.

Figur 2 veranschaulicht ein Training der Steuereinrichtung CTL in schematischer Darstellung.

Die an das technische System TS gekoppelte Steuereinrichtung CTL verfügt über einen oder mehrere Prozessoren PROC zum Ausführen von Verfahrensschritten der Steuereinrichtung CTL sowie über einen oder mehrere mit dem Prozessor PROC gekoppelte Speicher MEM zum Speichern der von der Steuereinrichtung CTL zu verarbeitenden Daten.

Weiterhin verfügt die Steuereinrichtung CTL über zwei separate Steuermodelle BM und RM.

Unter einem Steuermodell sei im vorliegenden Ausführungsbeispiel ein trainierbares Steuermodul, z.B. in Form eines neuronalen Netzes, mit einem Modell des technischen Systems TS verstanden. Das Steuermodell weist eine lernfähige Trainingsstruktur auf und wird häufig auch als Systemmodell bezeichnet.

Unter einem Training sei eine Optimierung einer Abbildung von Eingangsparametern eines Systemmodells auf einen oder mehrere Zielparameter verstanden. Diese Abbildung wird nach vorgegebenen, gelernten und/oder zu lernenden Kriterien während einer Trainingsphase optimiert. Als Kriterien können insbesondere bei Prädiktionsmodellen eine Prognosegüte, eine Klassifikationsgüte, eine Analysegüte und/oder eine Simulationsgüte oder - komplementär dazu - ein Prognosefehler, ein Klassifikationsfehler, ein Analysefehler und/oder ein Simulationsfehler herangezogen werden. Alternativ oder zusätzlich können eine Performanz, ein Ressourcenverbrauch, eine Ausbeute und/oder ein Verschleiß des technischen Systems TS als Kriterien vorgesehen sein. Als Prognosegüte kann zum Beispiel ein Abstand zwischen einem prädizierten und einem tatsächlich eintretenden Wert für den Zielparameter verwendet werden. Auf diese Weise kann ein Prädiktionsmodell dahingehend trainiert werden, einen jeweiligen Abstand zwischen prädiziertem und tatsächlich eintretendem Systemzustand zu minimieren, d.h. einen Systemzustand möglichst genau vorherzusagen. Ein solches Training wird häufig auch als maschinelles Lernen bezeichnet.

Für ein Training eines Steuermodells steht in der Regel eine Vielzahl von Standard-Trainingsverfahren zur Verfügung, wie z.B. Verfahren des überwachten, unüberwachten und/oder bestärkenden Lernens. Dabei können die Optimierungskriterien durch eine geeignete Kostenfunktion repräsentiert werden, zu deren Minimierung ein bekanntes Lernverfahren ausgeführt wird.

Ein Steuermodell kann insbesondere mittels eines neuronalen Netzes, einer Support-Vector-Machine, eines Entscheidungsbaums, allgemein eines datengetrieben trainierten Regressionsmodells, eines analytischen Modells oder mittels einer Kombination hiervon implementiert werden. Bei einem neuronalen Netz werden durch ein Training zum Beispiel eine Vernetzungsstruktur der Neuronen, Schwellenwerte der Neuronen und/oder Gewichte der Verbindungen zwischen Neuronen hinsichtlich eines Optimierungskriteriums optimiert, das heißt derart konfiguriert, dass die obige Abbildung optimiert wird. Beim datengetriebenen Regressionsmodell werden Koeffizienten dieses Modells optimiert.

Ein Steuermodell dient zum Simulieren oder Analysieren eines physikalischen, regelungstechnischen, stochastischen und/oder anderen Wirkungszusammenhangs des technischen Systems TS oder eines Teils davon, zur Prognose oder Klassifikation von Betriebsdaten, Zustandsdaten, Steuerdaten oder anderer Systemdaten und/oder zum Steuern des technischen Systems TS. Das Steuermodell modelliert vorzugsweise das technische System TS oder einen Teil davon sowie externe Einflüsse, von denen das technische System TS beeinflusst wird oder abhängig von denen das technische System TS gesteuert wird. Das Steuermodell kann als Modul, Funktion oder Routine implementiert werden, der Eingabedaten als Eingangsparameter zugeführt werden und die daraus Ausgabedaten als Zielparameter gemäß seiner Trainingstruktur ableitet. Das Systemmodell ist so zu trainieren, dass aus den Eingabedaten hinsichtlich vorgegebener Kriterien optimierte Ausgabedaten abgeleitet werden können.

Erfindungsgemäß verfügt die Steuereinrichtung CTL über ein erstes Steuermodell BM, das auch als Basismodell bezeichnet wird, sowie über ein zweites Steuermodell RM, das auch als Residualmodell bezeichnet wird. Beide Steuermodelle BM und RM sind wie vorstehend beschrieben implementiert und werden jeweils durch eine Datenstruktur kodiert, die vom Interpreter INT dekodierbar und ausführbar ist.

Das Basismodell BM und das Residualmodell RM werden anhand von erfassten Systemzuständen und Steueraktionen des technischen Systems TS trainiert. Die Systemzustände und Steueraktionen sind dabei logisch verschiedenen Zeitintervallen TI1 und TI2 zugeordnet.

Als erstes Zeitintervall TI1 wird ein Zeitintervall bezeichnet, in dem ein aktuell erfasster Systemzustand oder Zustandsverlauf SZ1 in Form von Zustandsdaten vorliegt. Das zweite Zeitintervall TI2 ist zeitlich nach dem ersten Zeitintervall TI1 angeordnet. Während des ersten Zeitintervalls TI1 ist ein im zweiten Zeitintervall TI2 auftretender Systemzustand SZ2 noch nicht bekannt und soll durch die trainierte Steuereinrichtung CTL anhand des erfassten Systemzustandes SZ1 als dessen Folgezustand möglichst genau prädiziert werden. Am Ende des zweiten Zeitintervalls TI2 ist dann auch der in diesem Zeitintervall TI2 tatsächlich aufgetretene Systemzustand SZ2 in Form von Zustandsdaten erfasst und kann mit dem prädizierten Folgezustand verglichen werden, um eine Prädiktionsqualität zu ermitteln.

Das Basismodell BM ist dazu vorgesehen, anhand des aktuell erfassten Systemzustands SZ1 einen Folgezustand PZ zu prädizieren. Um das Basismodell BM für diesen Zweck zu trainieren, wird vom technischen System TS zum Basismodell BM ein aktuell erfasster Systemzustand SZ1 aus dem ersten Zeitintervall TI1 als Eingangsparameter übermittelt. Der Systemzustand SZ1 umfasst insbesondere eine dominierende Einflussgröße EG, zum Beispiel eine aktuell gemessene Windgeschwindigkeit. Wie oben beschrieben, dominiert die Einflussgröße EG einen Einfluss einer Steueraktion SA auf das technische System TS. Weiterhin wird zum Training des Basismodells BM vom technischen System TS zur Steuereinrichtung CTL ein tatsächlich aufgetretener Systemzustand SZ2 aus dem zweiten Zeitintervall TI2 übermittelt.

Das Basismodell BM ist im vorliegenden Ausführungsbeispiel durch ein neuronales Netz NNB implementiert. Aus dem Systemzustand SZ1 als Eingangsparameter leitet das neuronale Netz NNB einen prädizierten Folgezustand PZ als Zielparameter ab, der mit dem Systemzustand SZ2 verglichen wird, indem ein Abstandswert D für einen Abstand zwischen dem prädizierten Folgezustand PZ und dem Systemzustand SZ2 ermittelt wird. Der Abstandswert D repräsentiert einen Prädiktionsfehler des Basismodells BM und wird im vorliegenden Ausführungsbeispiel als Differenz D = SZ2 - PZ ermittelt. Ein Betrag |D| des Abstandswertes D wird ermittelt und zum Basismodell BM zurückgeführt. Als Abstandsbetrag |D| kann zum Beispiel ein euklidischer Abstand der darstellenden Vektoren oder eine andere Form eines Skalarprodukts oder eine andere Vektorraumnorm verwendet werden. Anhand des zurückgeführten Betrags |D| wird das neuronale Netz NNB - wie durch einen strichlierten Pfeil angedeutet - darauf trainiert, ein statistisches Mittel des Abstandes zwischen einem prädizierten Folgezustand, hier PZ, und einem im zweiten Zeitintervall TI2 tatsächlich aufgetretenen Systemzustand, hier SZ2, zu minimieren, das heißt den Folgezustand im statistischen Mittel möglichst gut zu prädizieren. Das statistische Mittel kann hierbei insbesondere ein gegebenenfalls gewichteter arithmetischer oder geometrischer Mittelwert sein, der vorzugsweise über ein Zeitfenster, zum Beispiel als gleitender Durchschnitt gebildet wird. Vorzugsweise werden Steueraktionen SA beim Training des Basismodells BM nicht berücksichtigt. Ein Einfluss dieser Steueraktionen SA geht beim Training des Basismodells BM als geringfügige statistische Störgröße ein, die gegenüber statistischen Schwankungen der Einflussgröße EG in der Regel vernachlässigbar sind. Diese Vernachlässigung hat in der Regel kaum Einfluss auf einen Trainingserfolg oder eine Vorhersagequalität des Basismodells BM.

Auf die vorstehende Weise wird das Basismodell BM darauf trainiert, primäre Abhängigkeiten zwischen der dominierenden Einflussgröße EG, hier z.B. der Windgeschwindigkeit, und dem dadurch bedingten Systemverhalten zu detektieren.

Alternativ oder zusätzlich kann das Basismodell BM auch anhand von Systemzuständen eines vom technischen System TS verschiedenen Trainingssystems (nicht dargestellt), zum Beispiel einer Windturbine gleichen oder ähnlichen Typs trainiert werden. Ein solches Training wird häufig auch als "Transfer Learning" bezeichnet.

Nach Abschluss des Trainings des Basismodells BM wird das Residualmodell RM trainiert. Das Residualmodell RM ist im vorliegenden Ausführungsbeispiel durch ein neuronales Netz NNR implementiert. Das Residualmodell RM dient dazu, anhand eines aktuell erfassten Systemzustands SZ1 und einer Steueraktion SA den mittels des trainierten Basismodells BM bestimmten Abstandswert D möglichst genau zu prädizieren. Um das Residualmodell RM für diesen Zweck zu trainieren, werden vom technischen System TS ein aktuell erfasster Systemzustand SZ1 aus dem ersten Zeitintervall TI1 sowie eine Steueraktion SA aus dem zweiten Zeitintervall TI2 zum Residualmodell RM ermittelt. Die Steueraktion SA ist hierbei dem zweiten Zeitintervall TI2 zugeordnet, insofern der Systemzustand SZ2 aus dem zweiten Zeitintervall TI2 durch diese Steueraktion bedingt ist.

Zum Training des Residualmodells RM wird das bereits trainierte Basismodell BM dazu genutzt, anhand des Systemzustandes SZ1 einen Folgezustand PZ zur prädizieren. Bei dieser Prädiktion durch das trainierte Basismodell BM werden Steueraktionen SA - wie schon beim Training des Basismodells BM - nicht berücksichtigt. Der durch das Basismodell BM prädizierte Folgezustand PZ wird mit dem Systemzustand SZ2 verglichen und dabei der Abstandswert D wie oben beschrieben ermittelt. Parallel dazu leitet das neuronale Netz NNR aus dem Systemzustand SZ1 und der Steueraktion SA als Eingangsparameter einen prädizierten Abstandswert PD als Zielparameter ab. Der prädizierte Abstandswert PD wird mit dem tatsächlich mittels des Basismodells BM bestimmten Abstandswert D verglichen, indem ein Abstand zwischen dem Abstandswert D und dem prädizierten Abstandswert PD, zum Beispiel als
Differenz D - PD ermittelt wird. Ein Betrag |D-PD| dieses Abstands wird zum Residualmodell RM zurückgeführt, um dessen neuronales Netz NNR anhand des zurückgeführten Betrags - wie durch einen strichliierten Pfeil angedeutet - darauf zu trainieren, den Abstand zwischen prädiziertem und tatsächlichem Abstandswert zu minimieren, das heißt den Abstandswert D möglichst gut zu prädizieren.

Es zeigt sich, dass der Einfluss von Steueraktionen SA in den Abstandswerten D in der Regel erheblich besser zu detektieren ist, als in den von der Einflussgröße EG dominierten Systemzuständen. Dies kann darauf zurückgeführt werden, dass die dominierenden Effekte vom trainierten Basismodell BM bereits absepariert wurden. Durch die Separation der Modellierung des technischen Systems TS in das Basismodell BM und das Residualmodell RM kann der Trainingserfolg der Steuereinrichtung CTL in der Regel erheblich gesteigert werden. Darüber hinaus werden in der Regel weniger Trainingsdaten und eine kürzere Trainingszeit benötigt.

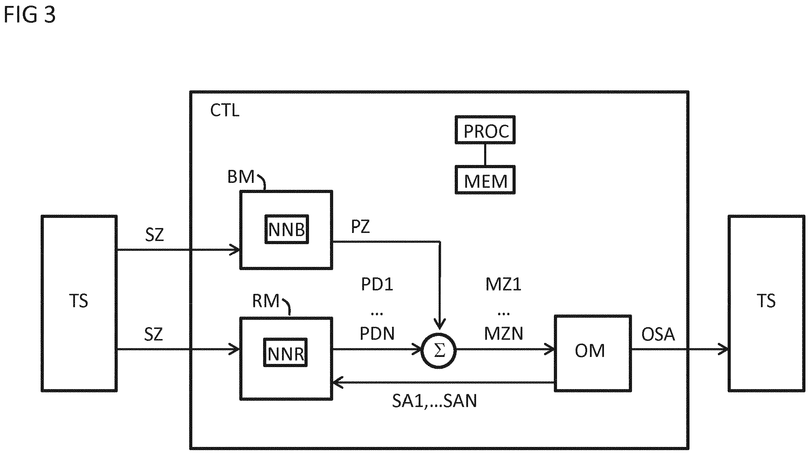

Figur 3 veranschaulicht ein Steuern des technischen Systems TS mittels der trainierten Steuereinrichtung CTL, das heißt mittels des Basismodells BM und des Residualmodells RM in schematischer Darstellung. Die in Figur 2 dargestellten Elemente sind in Figur 3 durch die gleichen Bezugszeichen bezeichnet. Aus Übersichtlichkeitsgründen ist dasselbe technische System TS auf beiden Seiten der Steuereinrichtung CTL separat dargestellt. Zusätzlich zu Figur 2 ist in Figur 3 ein Optimierungsmodul OM der Steuereinrichtung CTL dargestellt.

Das Optimierungsmodul OM dient dazu, für einen jeweiligen aktuellen Systemzustand oder Zustandsverlauf SZ eine hinsichtlich eines vorgegebenen Steuerkriteriums optimierte Steueraktion OSA zum Steuern des technischen Systems TS zu ermitteln. Das Steuerkriterium kann zum Beispiel eine Ausbeute, eine Performanz, einen Ressourcenverbrauch und/oder einen Verschleiß des technischen Systems TS betreffen und kann durch eine geeignete Kostenfunktion oder Belohnungsfunktion implementiert werden, die die Ausbeute, die Performanz, den Ressourcenverbrauch beziehungsweise den Verschleiß als Funktion des Systemzustandes SZ zurückgibt.

Im Rahmen der Steuerung des technischen Systems TS wird ein aktueller Systemzustand SZ durch die Steuereinrichtung CTL vom technischen System TS erfasst und dem Basismodell BM sowie dem Residualmodell RM zugeführt. Weiterhin werden durch das Optimierungsmodul OM mehrere Steueraktionen SA1,..., SAN generiert und zum Residualmodell RM übermittelt. Das trainierte Basismodell BM prädiziert dann anhand des zugeführten Systemzustandes SZ einen Folgezustand PZ und das trainierte Residualmodell RM prädiziert anhand des übermittelten Systemzustandes SZ und den Steueraktionen SA1,..., SAN für eine jeweilige Steueraktion SA1,... bzw. SAN, wie oben beschrieben, einen hierdurch jeweils erwirkten Abstandswert PD1,... bzw. PDN. Der prädizierte Folgezustand PZ wird dann anhand der prädizierten Abstandswerte PD1,..., PDN jeweils modifiziert um so einen modifizierten Folgezustand MZ1,... bzw. MZN zu ermitteln. Die modifizierten Folgezustände MZ1,..., MZN sind jeweils der erwirkenden Steueraktion SA1,... bzw. SAN zugeordnet. Vorzugsweise erfolgt die Modifikation derart, dass die prädizierten Abstandwerte PD1,..., PDN jeweils zum prädizierten Folgezustand PZ addiert werden, gemäß MZ1=PZ+PD1, ..., MZN=PZ+PDN. Die resultierenden modifizierten Folgezustände MZ1,..., MZN werden zum Optimierungsmodul OM übermittelt.

Durch das Optimierungsmodul OM werden aus den modifizierten Folgezuständen MZ1,..., MZN derjenige oder diejenigen Folgezustände als Zielzustände selektiert, die das vorgegebene Steuerkriterium optimieren. Alternativ oder zusätzlich kann durch das Optimierungsmodul OM ein numerisches Optimierungsverfahren ausgeführt werden, das abhängig von bisher generierten Steueraktionen und den selektierten Folgezuständen weitere, optimierte Steueraktionen generiert, zum Residualmodell RM übermittelt, die resultierenden modifizierten Folgezustände mittels des Steuerkriteriums bewertet und entsprechend erneut selektiert. Ein solches Optimierungsverfahren kann vorzugsweise iterativ ausgeführt werden.

Für den letztlich selektierten, das Steuerkriterium optimierenden modifizierten Folgezustand wird dann die diesem zugeordnete Steueraktion bestimmt und als optimierte Steueraktion OSA durch das Optimierungsmodul OM ausgegeben.

Alternativ oder zusätzlich zum Optimierungsmodul OM kann ein drittes Steuermodul PM (nicht dargestellt) vorgesehen sein, das mittels des trainierten Basismodells BM und des trainierten Residualmodells RM darauf trainiert wird, anhand aktueller Systemzustände SZ diejenigen optimierten Steueraktionen OSA auszugeben, die das obige Steuerkriterium optimieren. Vorzugsweise wird das dritte Steuermodell PM mittels Verfahren des bestärkenden Lernens (Reinforcement Learning) trainiert. Ein derartiges drittes Steuermodell wird häufig auch als Policy Model bezeichnet.

Die vom Optimierungsmodul OM oder vom dritten Steuermodul PM ausgegebene optimierte Steueraktion OSA wird schließlich von der Steuereinrichtung CTL dazu verwendet, das technische System TS zu steuern.

## Patentansprüche

1. Verfahren zum Steuern eines technischen Systems (TS), wobei
a) ein Systemzustand (SZ, SZ1, SZ2) des technischen Systems (TS) fortlaufend erfasst wird,
b) mittels eines trainierten ersten Steuermodells (BM) anhand eines erfassten Systemzustandes (SZ, SZ1) ein Folgezustand (PZ) des technischen Systems (TS) prädiziert wird,
c) ein Abstandswert (D) für einen Abstand zwischen dem prädizierten Folgezustand (PZ) und einem tatsächlich eintretenden Systemzustand (SZ2) ermittelt wird,
d) ein zweites Steuermodell (RM) mittels des trainierten ersten Steuermodells (BM) darauf trainiert wird, anhand eines erfassten Systemzustandes (SZ, SZ1) und einer Steueraktion (SA, SA1,...,SAN) zum Steuern des technischen Systems (TS) den Abstandswert zu prädizieren,
e) ein durch das erste Steuermodell (BM) prädizierter Folgezustand (PZ) anhand eines durch das trainierte zweite Steuermodell prädizierten Abstandswerts (PD, PD1,...,PDN) modifiziert wird, und
f) der modifizierte Folgezustand (MZ1,...,MZN) zum Steuern des technischen (TS) Systems ausgegeben wird.

2. Verfahren nach Anspruch 1, **dadurch gekennzeichnet, dass** das erste und/oder das zweite Steuermodell (BM, RM) ein neuronales Netz, einen Gauß-Prozess, eine Support-Vector-Machine, ein datengetrieben trainierbares Regressionsmodell, ein physikalisches Modell und/oder einen Entscheidungsbaum umfasst.

3. Verfahren nach einem der vorhergehenden Ansprüche, **dadurch gekennzeichnet,**
**dass** der Systemzustand (SZ, SZ1, SZ2) eine Einflussgröße (EG) umfasst, deren Einfluss auf das technische System (TS) einen Einfluss der Steueraktion (SA, SA1,...,SAN) auf das technische System (TS) dominiert.

4. Verfahren nach Anspruch 3, **dadurch gekennzeichnet,**
**dass** das technische System (TS) eine Windturbine ist und die Einflussgröße (EG) eine Windgeschwindigkeit, eine Turbinenleistung, eine Rotationsgeschwindigkeit und/oder eine Beschleunigung der Triebwerksgondel umfasst.

5. Verfahren nach Anspruch 3 oder 4, **dadurch gekennzeichnet, dass** die Einflussgröße (EG) statistischen Schwankungen unterworfen ist, und
dass das erste Steuermodell (BM) darauf trainiert wird, ein statistisches Mittel eines Abstandes zwischen dem prädizierten Folgezustand (PZ) und einem tatsächlich eintretenden Systemzustand (SZ2) zu optimieren.

6. Verfahren nach einem der vorhergehenden Ansprüche, **dadurch gekennzeichnet, dass**
das erste Steuermodell (BM) anhand von erfassten Systemzuständen (SZ, SZ1, SZ2) des technischen Systems (TS) trainiert wird.

7. Verfahren nach einem der vorhergehenden Ansprüche, **dadurch gekennzeichnet, dass**
das erste Steuermodell (BM) anhand von erfassten Systemzuständen eines vom technischen System (TS) verschiedenen Trainingssystems trainiert wird.

8. Verfahren nach einem der vorhergehenden Ansprüche, **dadurch gekennzeichnet, dass**
bei einem Training des ersten Steuermodells (BM) und/oder bei der Prädiktion des Folgezustandes (PZ) die Steueraktion (SA, SA1,...,SAN) nicht berücksichtigt wird.

9. Verfahren nach einem der vorhergehenden Ansprüche, **dadurch gekennzeichnet,**
**dass** für mehrere Steueraktionen (SA1,...,SAN) mittels des trainierten zweiten Steuermodells (RM) jeweils ein Abstandswert (PD1,...,PDN) prädiziert und damit ein prädizierter Folgezustand (PZ) modifiziert und der jeweiligen Steueraktion (SA1,...,SAN) zugeordnet wird,
**dass** aus den resultierenden modifizierten Folgezuständen (MZ1,...,MZN) ein Zielzustand selektiert wird, und
**dass** das technische System (TS) anhand der dem selektierten Zielzustand zugeordneten Steueraktion (OSA) gesteuert wird.

10. Verfahren nach einem der vorhergehenden Ansprüche, **dadurch gekennzeichnet,**
**dass** ein drittes Steuermodell (PM) mittels des trainierten ersten Steuermodells (BM) und des trainierten zweiten Steuermodells (RM) darauf trainiert wird, anhand eines erfassten Systemzustandes (SZ, SZ1, SZ2) eine optimierte Steueraktion (OSA) zum Steuern des technischen Systems (TS) auszugeben.

11. Verfahren nach Anspruch 10, **dadurch gekennzeichnet,**
**dass** das dritte Steuermodell (PM) mittels eines Verfahrens des bestärkenden Lernens trainiert wird.

12. Steuereinrichtung (CTL) zum Steuern eines technischen Systems (TS) eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.

## Claims

1. Method for controlling a technical system (TS), wherein
a) a system state (SZ, SZ1, SZ2) of the technical system (TS) is continually detected,
b) by means of a trained first control model (BM), a subsequent state (PZ) of the technical system (TS) is predicted on the basis of a detected system state (SZ, SZ1),
c) a distance value (D) is determined for a distance between the predicted subsequent state (PZ) and an actually occurring system state (SZ2),
d) a second control model (RM) is trained by means of the trained first control model (BM) to predict the distance value on the basis of a detected system state (SZ, SZ1), and on the basis of a control action (SA, SA1, ..., SAN) for controlling the technical system (TS),
e) a subsequent state (PZ) predicted by the first control model (BM) is modified on the basis of a distance value (PD, PD1, ..., PDN) predicted by the trained second control model, and
f) the modified subsequent state (MZ1, ..., MZN) is generated as an output for the control of the technical system (TS).

2. Method according to Claim 1, **characterized in that** the first and/or the second control model (BM, RM) comprise(s) a neural network, a Gaussian process, a support vector machine, a data-driven trainable regression model, a physical model and/or a decision tree.

3. Method according to one of the preceding claims, **characterized in that**
the system state (SZ, SZ1, SZ2) incorporates an influencing variable (EG), the influence of which upon the technical system (TS) dominates an influence of the control action (SA, SA1, ..., SAN) upon the technical system (TS).

4. Method according to Claim 3, **characterized in that** the technical system (TS) is a wind turbine, and the influencing variable (EG) comprises a wind speed, a turbine capacity, a speed of rotation and/or an acceleration of the generating gear nacelle.

5. Method according to Claim 3 or 4, **characterized in that** the influencing variable (EG) is subject to statistical fluctuations, and
**in that** the first control model (BM) is trained to optimize a statistical mean of a distance between the predicted subsequent state (PZ) and an actually occurring system state (SZ2).

6. Method according to one of the preceding claims, **characterized in that**
the first control model (BM) is trained on the basis of detected system states (SZ, SZ1, SZ2) of the technical system (TS) .

7. Method according to one of the preceding claims, **characterized in that**
the first control model (BM) is trained on the basis of detected system states of a training system which differs from the technical system (TS).

8. Method according to one of the preceding claims, **characterized in that**
in the training of the first control model (BM) and/or in the prediction of the subsequent state (PZ), the control action (SA, SA1, ..., SAN) is not considered.

9. Method according to one of the preceding claims, **characterized in that**,
for a plurality of control actions (SA1, ..., SAN), a respective distance value (PD1, ..., PDN) is predicted by means of the trained second control model (RM), and a predicted subsequent state (PZ) is thus modified and assigned to the respective control action (SA1, ..., SAN),
**in that**, from the resulting modified subsequent states (MZ1, ..., MZN), a target state is selected, and
**in that** the technical system (TS) is controlled on the basis of the control action (OSA) which is assigned to the selected target state.

10. Method according to one of the preceding claims, **characterized in that**
a third control model (PM), by means of the trained first control model (BM) and the trained second control model (RM) is trained, on the basis of a detected system state (SZ, SZ1, SZ2), to generate the output of an optimum control action (OSA) for the control of the technical system (TS).

11. Method according to Claim 10, **characterized in that** the third control model (PM) is trained by means of a reinforcement learning method.

12. Control device (CTL) for the control of a technical system (TS), which is designed to execute a method according to one of the preceding claims.

13. Computer program product which is designed to execute a method according to one of Claims 1 to 11.

14. Computer-readable storage medium containing a computer program product according to Claim 13.

## Revendications

1. Procédé destiné à la commande d'un système technique (TS), dans lequel
a) un état de système (SZ, SZ1, SZ2) du système technique (TS) est détecté de manière continue,
b) un état suivant (PZ) du système technique (TS) est prédit au moyen d'un premier moyen de commande entraîné (BM) à l'aide d'un état de système (SZ, SZ1) détecté,
c) une valeur d'écart (D) pour un écart entre l'état suivant (PZ) prédit et un état de système (SZ2) se produisant effectivement est déterminée,
d) un deuxième modèle de commande (RM) est entraîné au moyen du premier modèle de commande entraîné (BM) pour prédire la valeur d'écart à l'aide d'un état de système (SZ, SZ1) détecté et d'une action de commande (SA, SA1, ..., SAN) destinée à la commande du système technique (TS),
e) un état suivant (PZ) prédit par le biais du premier modèle de commande (BM) est modifié à l'aide d'une valeur d'écart (PD, PD1, ..., PDN) prédite par le biais du deuxième modèle de commande entraîné, et
f) l'état suivant modifié (MZ1, ..., MZN) destiné à la commande du système technique (TS) est généré.

2. Procédé selon la revendication 1, **caractérisé en ce que** le premier et/ou le deuxième modèle de commande (BM, RM) comprennent un réseau neuronal, un processus de Gauß, une machine à vecteurs de support, un modèle de régression piloté par des données et apte à être entraîné, un modèle physique et/ou un arbre de décision.

3. Procédé selon l'une des revendications précédentes, **caractérisé en ce que** l'état de système (SZ, SZ1, SZ2) comprend une grandeur d'influence (EG) dont l'influence sur le système technique (TS) domine une influence de l'action de commande (SA, SA1, ..., SAN) sur le système technique (TS).

4. Procédé selon la revendication 3, **caractérisé en ce que** le système technique (TS) est une éolienne et la grandeur d'influence (EG) comprend une vitesse du vent, une puissance de la turbine, une vitesse de rotation et/ou une accélération de la nacelle du moteur.

5. Procédé selon la revendication 3 ou 4, **caractérisé en ce que** la grandeur d'influence (EG) est soumise à des fluctuations statistiques, et **en ce que** le premier modèle de commande (BM) est entraîné pour optimiser une moyenne statistique d'un écart entre l'état suivant (PZ) prédit et un état de système (SZ2) se produisant effectivement.

6. Procédé selon l'une des revendications précédentes, **caractérisé en ce que** le premier modèle de commande (BM) est entraîné à l'aide d'états de système (SZ, SZ1, SZ2) détectés du système technique (TS).

7. Procédé selon l'une des revendications précédentes, **caractérisé en ce que** le premier modèle de commande (BM) est entraîné à l'aide d'états de système détectés d'un système d'entraînement différent du système technique (TS) .

8. Procédé selon l'une des revendications précédentes, **caractérisé en ce que** lors d'un entraînement du premier modèle de commande (BM) et/ou lors de la prédiction de l'état suivant (PZ) l'action de commande (SA, SA1, ..., SAN) n'est pas prise en compte.

9. Procédé selon l'une des revendications précédentes, **caractérisé en ce que** pour plusieurs actions de commande (SA1, ..., SAN) une valeur d'écart (PD1, ..., PDN) est respectivement prédite au moyen du deuxième modèle de commande entraîné (RM) et de ce fait un état suivant (PZ) prédit est modifié et associé à l'action de commande (SA1, ..., SAN) respective, **en ce que**, à partir des états suivants modifiés (MZ1, ..., MZN) résultants un état cible est sélectionné, et **en ce que** le système technique (TS) est commandé à l'aide de l'action de commande (OSA) associée à l'état cible sélectionné.

10. Procédé selon l'une des revendications précédentes, **caractérisé en ce qu'**un troisième modèle de commande (PM) est entraîné au moyen du premier modèle de commande entraîné (BM) et du deuxième modèle de commande entraîné (RM) pour générer une action de commande optimisée (OSA) destinée à la commande du système technique (TS) à l'aide d'un état de système (SZ, SZ1, SZ2) détecté.

11. Procédé selon la revendication 10, **caractérisé en ce que** le troisième modèle de commande (PM) est entraîné au moyen d'un procédé de l'apprentissage par renforcement.

12. Dispositif de commande (CTL) destiné à la commande d'un système technique (TS) conçu pour la mise en œuvre d'un procédé selon l'une des revendications précédentes.

13. Produit de programme informatique conçu pour la mise en œuvre d'un procédé selon l'une des revendications 1 à 11.

14. Support d'enregistrement lisible par un ordinateur avec un produit de programme informatique selon la revendication 13.
